# EUROPEAN PATENT APPLICATION

(11) **EP 4 648 333 A1**
(43) Date of publication of application: **12.11.2025**
(21) Application number: 23918970.7
(22) Date of filing: 30.01.2023
(51) Int. Cl.: H04L 5/00

(54) **COMMUNICATION METHOD AND APPARATUS**

(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN); JIANG, Chenglong, Shenzhen, Guangdong 518129 (CN)
(74) Representative: Isarpatent
(86) International application number: PCT/CN2023/073905
(87) International publication number: WO 2024/159380

(57) **Abstract**

This application discloses a communication method and apparatus, to resolve a problem that interference estimation performance is poor during high-order data transmission. The method includes: determining that a DMRS port allocated to a first terminal is a first DMRS port; and sending first information and second information to the first terminal. The first information indicates the first DMRS port, the second information indicates a plurality of sets corresponding to the first DMRS port, and any one of the plurality of sets includes at least one DMRS port. Different DMRS port groups and different port group indications can improve accuracy and fineness of interference processing of a terminal device, help implement mapping of a higher-order DMRS, improve a port multiplexing capability, and implement transmission of more orthogonal data streams.

## Description

### TECHNICAL FIELD

This application relates to the field of communication technologies, and in particular, to a communication method and apparatus.

### BACKGROUND

In an existing protocol, a demodulation reference signal (demodulation reference signal, DMRS) supports a maximum of 12 orthogonal ports, that is, interference estimation of a maximum of 12 data streams can be implemented in the existing protocol. With development of communication, higher-order data transmission (namely, data transmission of more data streams) in a larger antenna dimension may be required in the future, for example, hundreds of data streams are simultaneously transmitted. Spectrum efficiency of performing data transmission through 12 ports is far from satisfying the higher-order data transmission (namely, data transmission of more data streams) in the larger antenna dimension in the future. Therefore, how to overcome a problem that interference estimation performance is poor during higher-order data transmission is an urgent problem to be resolved.

### SUMMARY

This application provides a communication method and apparatus, to resolve a problem that interference estimation performance is poor during high-order data transmission.

According to a first aspect, a communication method is provided. The method may be performed by a network device or a chip, a chip system, or a circuit located in the network device. The method may be implemented by using the following steps: determining that a DMRS port allocated to a first terminal is a first DMRS port; and sending first information and second information to the first terminal. The first information indicates the first DMRS port, the second information indicates a plurality of sets corresponding to the first DMRS port, and any one of the plurality of sets includes at least one DMRS port.

In this embodiment of this application, different DMRS port groups and different port group indications can improve accuracy and fineness of interference processing of a terminal device, help implement mapping of a higher-order DMRS, improve a port multiplexing capability, and implement transmission of more orthogonal data streams.

It may be understood that "sending the first information and the second information" only represents a direction of transferring the first information and the second information, including: performing direct sending through an air interface, and also including: performing indirect sending by a processing unit through an air interface. Therefore, "sending" may also be understood as "output" of a chip interface.

It may be understood that the first information and the second information may be separately sent or simultaneously sent.

In a possible design, a DMRS port included in the plurality of sets is determined based on interference to the first DMRS port. According to the foregoing design, a terminal can perform interference estimation based on interference of each set to the first DMRS port, to improve accuracy and fineness of interference processing of the terminal device.

In a possible design, the plurality of sets include at least two of a first set, a second set, and a third set; the first set includes at least one DMRS port that meets the following condition: a corresponding time-frequency resource is the same as a time-frequency resource of the first DMRS port, and the at least one DMRS port is orthogonal to the first DMRS port; the second set includes at least one DMRS port that meets the following condition: a corresponding time-frequency resource is different from a time-frequency resource of the first DMRS port, and the at least one DMRS port is orthogonal to the first DMRS port; and the third set includes at least one DMRS port that meets the following condition: a corresponding time-frequency resource is the same as a time-frequency resource of the first DMRS port, and the at least one DMRS port is non-orthogonal to the first DMRS port. In the foregoing design, a plurality of sets are obtained through classification based on a time-frequency resource relationship and an orthogonal/non-orthogonal relationship between another DMRS port and the first DMRS port, to improve accuracy and fineness of interference processing of the terminal device.

In a possible design, the plurality of sets include a fourth set and a fifth set; any DMRS port included in the fourth set meets the following condition: a ratio of an amount of interference to the first DMRS port to a total amount of interference of all DMRS ports included in the plurality of sets to the first DMRS port is greater than a first threshold; and any DMRS port included in the fifth set meets the following condition: a ratio of an amount of interference to the first DMRS port to the total amount of interference of all the DMRS ports included in the plurality of sets to the first DMRS port is less than or equal to the first threshold. In the foregoing design, two sets are obtained through classification based on interference of another DMRS port to the first DMRS port, to improve accuracy and fineness of interference processing of the terminal device.

In a possible design, the plurality of sets include a sixth set and a seventh set; any DMRS port included in the sixth set meets the following condition: a ratio of a corresponding quantity of scheduling layers to a sum of quantities of scheduling layers of all DMRS ports included in the plurality of sets is greater than a second threshold; and a DMRS port included in the seventh set meets the following condition: a ratio of a corresponding quantity of scheduling layers to the sum of the quantities of scheduling layers of all the DMRS ports included in the plurality of sets is less than or equal to the second threshold. In the foregoing design, two sets are obtained through classification based on a quantity of scheduling layers of another DMRS port, to improve accuracy and fineness of interference processing of the terminal device.

In a possible design, the method further includes: sending third information to the first terminal. The third information indicates sequence information of some of the plurality of sets. Different sets match different sequence indication manners, to further reduce indication overheads and improve data transmission efficiency.

In a possible design, the plurality of sets include the first set, the second set, and the third set, and the third information indicates sequence information of the first set and/or sequence information of the second set. In the foregoing design, the third information indicates the sequence information of the first set and/or the sequence information of the second set, to improve accuracy of channel estimation of the first set and/or the second set. The third information does not indicate sequence information of the third set, to reduce signaling overheads.

In a possible design, the plurality of sets include the first set and the second set, and the third information indicates sequence information of the first set or sequence information of the second set. In this manner, not only accuracy of channel estimation of the first set or the second set can be improved, but also signaling overheads can be reduced.

In a possible design, the plurality of sets include the first set and the third set, and the third information indicates sequence information of the first set. In this manner, not only accuracy of channel estimation of the first set can be improved, but also signaling overheads can be reduced.

In a possible design, the plurality of sets include the second set and the third set, and the third information indicates sequence information of the second set. In this manner, not only accuracy of channel estimation of the second set can be improved, but also signaling overheads can be reduced.

In a possible design, the third information indicates sequence information of the fourth set. In this manner, the third information indicates the sequence information of the fourth set, to improve accuracy of channel estimation of the fourth set, and the third information does not indicate sequence information of the fifth set, to reduce signaling overheads.

In a possible design, the third information indicates sequence information of the sixth set. In this manner, the third information indicates the sequence information of the sixth set, to improve accuracy of channel estimation of the sixth set, and the third information does not indicate sequence information of the seventh set, to reduce signaling overheads.

In a possible design, the method further includes: sending fourth information to a second terminal. The fourth information indicates a second DMRS port allocated to the second terminal. A set to which the second DMRS port belongs is determined based on information about a distance between the second terminal and the first terminal. According to the foregoing design, communication interference between two terminals can be reduced.

In a possible design, the second information includes a DMRS port number included in each of the plurality of sets; or the second information includes indexes of the plurality of sets; or the second information includes at least two of the following information about the plurality of sets: a largest DMRS port number, a smallest DMRS port number, and a quantity of DMRS ports.

According to a second aspect, a communication method is provided. The method may be performed by a terminal device or a chip, a chip system, or a circuit located in the terminal device. The method may be implemented by using the following steps: receiving first information and second information from a network device. The first information indicates a first DMRS port, the second information indicates a plurality of sets corresponding to the first DMRS port, and any one of the plurality of sets includes at least one DMRS port.

In this embodiment of this application, different DMRS port groups and different port group indications can improve accuracy and fineness of interference processing of a terminal device, help implement mapping of a higher-order DMRS, improve a port multiplexing capability, and implement transmission of more orthogonal data streams.

It may be understood that "receiving the first information and the second information" only represents a direction of transferring the first information and the second information, including: performing direct receiving through an air interface, and also including: performing indirect receiving by a processing unit through an air interface. Therefore, "receiving" may also be understood as "input" of a chip interface.

It may be understood that the first information and the second information may be separately received or simultaneously received.

In a possible design, a DMRS port included in the plurality of sets is determined based on interference to the first DMRS port. According to the foregoing design, a terminal can perform interference estimation based on interference of each set to the first DMRS port, to improve accuracy and fineness of interference processing of the terminal device.

In a possible design, the plurality of sets include at least two of a first set, a second set, and a third set; the first set includes at least one DMRS port that meets the following condition: a corresponding time-frequency resource is the same as a time-frequency resource of the first DMRS port, and the at least one DMRS port is orthogonal to the first DMRS port; the second set includes at least one DMRS port that meets the following condition: a corresponding time-frequency resource is different from a time-frequency resource of the first DMRS port, and the at least one DMRS port is orthogonal to the first DMRS port; and the third set includes at least one DMRS port that meets the following condition: a corresponding time-frequency resource is the same as a time-frequency resource of the first DMRS port, and a corresponding sequence is different from a sequence of the first DMRS.

In the foregoing design, a plurality of sets are obtained through classification based on a time-frequency resource relationship and an orthogonal/non-orthogonal relationship between another DMRS port and the first DMRS port, to improve accuracy and fineness of interference processing of the terminal device.

In a possible design, the plurality of sets include a fourth set and a fifth set; any DMRS port included in the fourth set meets the following condition: a ratio of an amount of interference to the first DMRS port to a total amount of interference of all DMRS ports included in the plurality of sets to the first DMRS port is greater than a first threshold; and any DMRS port included in the fifth set meets the following condition: a ratio of an amount of interference to the first DMRS port to the total amount of interference of all the DMRS ports included in the plurality of sets to the first DMRS port is less than or equal to the first threshold.

In the foregoing design, two sets are obtained through classification based on interference of another DMRS port to the first DMRS port, to improve accuracy and fineness of interference processing of the terminal device.

In a possible design, the plurality of sets include a sixth set and a seventh set; any DMRS port included in the sixth set meets the following condition: a ratio of a corresponding quantity of scheduling layers to a sum of quantities of scheduling layers of all DMRS ports included in the plurality of sets is greater than a second threshold; and a DMRS port included in the seventh set meets the following condition: a ratio of a corresponding quantity of scheduling layers to the sum of the quantities of scheduling layers of all the DMRS ports included in the plurality of sets is less than or equal to the second threshold.

In the foregoing design, two sets are obtained through classification based on a quantity of scheduling layers of another DMRS port, to improve accuracy and fineness of interference processing of the terminal device.

In a possible design, the method further includes: receiving third information from the network device. The third information indicates sequence information of some of the plurality of sets. Different sets match different sequence indication manners, to further reduce indication overheads and improve data transmission efficiency.

In a possible design, the plurality of sets include the first set, the second set, and the third set, and the third information indicates sequence information of the first set and/or sequence information of the second set. In the foregoing design, the third information indicates the sequence information of the first set and/or the sequence information of the second set, to improve accuracy of channel estimation of the first set and/or the second set. The third information does not indicate sequence information of the third set, to reduce signaling overheads.

In a possible design, the plurality of sets include the first set and the second set, and the third information indicates sequence information of the first set or sequence information of the second set. In this manner, not only accuracy of channel estimation of the first set or the second set can be improved, but also signaling overheads can be reduced.

In a possible design, the plurality of sets include the first set and the third set, and the third information indicates sequence information of the first set. In this manner, not only accuracy of channel estimation of the first set can be improved, but also signaling overheads can be reduced.

In a possible design, the plurality of sets include the second set and the third set, and the third information indicates sequence information of the second set. In this manner, not only accuracy of channel estimation of the second set can be improved, but also signaling overheads can be reduced.

In a possible design, the third information includes sequence information of the fourth set. In this manner, the third information indicates the sequence information of the fourth set, to improve accuracy of channel estimation of the fourth set, and the third information does not indicate sequence information of the fifth set, to reduce signaling overheads.

In a possible design, the third information includes sequence information of the sixth set. In this manner, the third information indicates the sequence information of the sixth set, to improve accuracy of channel estimation of the sixth set, and the third information does not indicate sequence information of the seventh set, to reduce signaling overheads.

In a possible design, the second information includes a DMRS port number included in each of the plurality of sets; or the second information includes indexes of the plurality of sets; or the second information includes at least two of the following information about the plurality of sets: a largest DMRS port number, a smallest DMRS port number, and a quantity of DMRS ports.

In a possible design, the method further includes: determining interference of the plurality of sets to the first DMRS port. The plurality of sets correspond to different interference measurement manners.

In a possible design, determining the interference of the plurality of sets to the first DMRS port includes: determining interference of the first set to the first DMRS port based on a minimum mean square error algorithm; determining interference of the second set to the first DMRS port based on a least square LS algorithm; and determining interference of the third set to the first DMRS port based on a successive interference cancellation SIC algorithm. According to the foregoing design, accuracy of interference processing can be improved, to improve communication performance.

According to a third aspect, this application further provides a communication apparatus. The apparatus is a terminal device or a chip in the terminal device. The communication apparatus has a function of implementing any method provided in the second aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a network device, for example, data or signal receiving and sending. For example, the communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the second aspect. Details are not described herein again. For example, the processing unit may be a processor, and the communication unit may be a transceiver or a communication interface. It may be understood that, if the apparatus is a terminal device, the transceiver may be implemented by using an antenna, a feeder, a codec, or the like in the apparatus; or if the apparatus is a chip (system) or a circuit disposed in the terminal device, the communication unit may be a communication interface, a communication circuit, a pin, or the like of the chip (system) or the circuit.

According to a fourth aspect, this application further provides a communication apparatus. The apparatus is a network device or a chip in the network device. The communication apparatus has a function of implementing any method provided in the first aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes a communication interface, and the communication interface is configured to support communication between the communication apparatus and a device such as a terminal device, for example, data or signal receiving and sending. For example, the communication interface may be a transceiver, a circuit, a bus, a module, or another type of communication interface.

In a possible design, the communication apparatus includes corresponding functional modules respectively configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the first aspect. Details are not described herein again. For example, the processing unit may be a processor, and the communication unit may be a transceiver or a communication interface. It may be understood that, if the apparatus is a terminal device, the transceiver may be implemented by using an antenna, a feeder, a codec, or the like in the apparatus; or if the apparatus is a chip (system) or a circuit disposed in the terminal device, the communication unit may be a communication interface, a communication circuit, a pin, or the like of the chip (system) or the circuit.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs by using a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs by using a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory. The chip system is configured to implement the method in any one of the first aspect or the second aspect and the possible designs. The chip system may include a chip, or may include a chip and another discrete component.

According to a tenth aspect, a communication system is provided. The system includes the apparatus (for example, a terminal device) in the second aspect and the apparatus (for example, a network device) in the first aspect.

For technical effect that can be achieved by a technical solution in any one of the third aspect to the tenth aspect, refer to the descriptions of the technical effect that can be achieved by the technical solution in the first aspect or the second aspect. No repeated description is provided.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of three sets according to an embodiment of this application;
FIG. 4 is a diagram of a structure of a communication apparatus according to an embodiment of this application; and
FIG. 5 is a diagram of a structure of a communication apparatus according to an embodiment of this application.

### DESCRIPTION OF EMBODIMENTS

The following describes in detail embodiments of this application with reference to accompanying drawings.

The following describes some terms in embodiments of this application, to facilitate understanding of a person skilled in the art.
1. An antenna port may be understood as a transmit antenna identified by a receive device, or a receive antenna that can be identified by a transmit device, or a transmit antenna or a receive antenna that can be distinguished in space, and may be referred to as a physical antenna herein.
2. A reference signal port may be understood as a virtual antenna or a logical antenna, and may be a weighted combination of a plurality of physical antennas. A weighting coefficient of the reference signal port is related to a precoding matrix loaded on a reference signal. If the precoding matrix loaded on the reference signal may be an identity matrix, one antenna port is configured for each virtual antenna, each virtual antenna corresponds to one physical antenna, and each antenna port may correspond to one reference signal or one reference signal port. If the precoding matrix loaded on the reference signal is not an identity matrix, a plurality of antenna ports are configured for one virtual antenna, one virtual antenna corresponds to a plurality of physical antennas, and the plurality of antenna ports may correspond to one reference signal or one reference signal port. For example, if the reference signal is a channel state information-reference signal (channel state information-reference signal, CSI-RS), the reference signal port may be referred to as a CSI-RS port; and if the reference signal is a demodulation reference signal (demodulation reference signal, DMRS), the reference signal port may be referred to as a DMRS port.

At least one (item) in embodiments of this application indicates one or more (items). "A plurality of (items) "means two (items) or more than two (items). The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. In addition, it should be understood that although terms such as "first" and "second" may be used in embodiments of this application to describe objects, these objects should not be limited by these terms. These terms are merely used to distinguish the objects from each other.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any method or design solution described as an "example" or "for example" in embodiments of this application should not be explained as being more preferred or having more advantages than another method or design solution. To be precise, use of the word such as "example" or "for example" is intended to present a relative concept in a specific manner.

The technologies provided in embodiments of this application may be applied to various communication systems, for example, a 4th generation (4th generation, 4G) communication system (for example, a long term evolution (Long Term Evolution, LTE) system), a 5th generation (5th generation, 5G) communication system, a worldwide interoperability for microwave access (worldwide interoperability for microwave access, WiMAX) or a wireless local area network (wireless local area network, WLAN) system, a converged system of a plurality of systems, or a future communication system, for example, a 6th generation (6th generation, 6G) communication system. The 5G communication system may also be referred to as a new radio (new radio, NR) system.

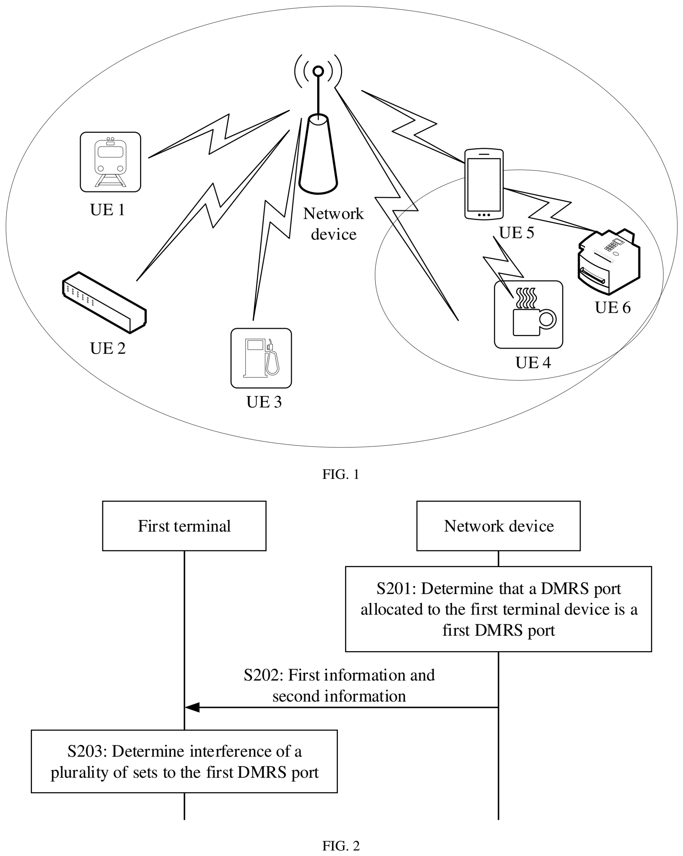

FIG. 1 shows a communication system according to an embodiment of this application. The communication system includes a network device and six terminal devices, namely, UE 1 to UE 6. In the communication system, the UE 1 to the UE 6 may send uplink data to the network device, and the network device may receive the uplink data sent by the UE 1 to the UE 6. In addition, UE 4 to the UE 6 may also form a communication subsystem. The network device may send downlink information to the UE 1, UE 2, UE 3, and UE 5, and the UE 5 may send the downlink information to the UE 4 and the UE 6 based on a device-to-device (device-to-device, D2D) technology.

It should be noted that a quantity and types of devices in the communication system shown in FIG. 1 are merely used as an example. This embodiment of this application is not limited thereto. In an actual application, the communication system may further include more terminal devices and more network devices, and may further include another network element, for example, may include a core network element and a network management device such as an operation administration and maintenance (operation administration and maintenance, OAM) network element.

The network device may be a base station (base station, BS). The network device may also be referred to as an access network device, an access node (access node, AN), or a radio access node (radio access node, RAN). The base station may be in a plurality of forms such as a macro base station, a micro base station, a relay station, or an access point. The network device may be connected to a core network (for example, an LTE core network or a 5G core network), and the network device may provide a wireless access service for the terminal devices. For example, the network device includes but is not limited to at least one of the following: a base station in 5G, for example, a transmission reception point (Transmission Reception Point, TRP) or a next-generation NodeB (generation NodeB, gNB), a network device in an open radio access network (open radio access network, O-RAN) or a module included in the network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmission point (transmission point, TP), and/or a mobile switching center. Alternatively, the network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the network device may be a vehicle-mounted device, a wearable device, a network device in a future evolved public land mobile network (public land mobile network, PLMN), or the like. In some deployments of the network device, the network device may alternatively be an open radio access network (open radio access network, ORAN) architecture, or the like. For example, the network device shown in this embodiment of this application may be an access network device in an ORAN, a module in an access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

In this embodiment of this application, a communication apparatus configured to implement a network device function may be a network device, or may be a network device having some network device functions, or may be an apparatus that can support the network device in implementing the functions, for example, a chip system, a hardware circuit, a software module, or a hardware circuit plus a software module. The communication apparatus may be installed in the network device or used together with the network device. In the method in embodiments of this application, an example in which the communication apparatus configured to implement the network device function is a network device is used for description.

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via the network device. The terminal device may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in smart grid (smart grid), a wireless terminal in transportation safety (transportation safety), a wireless terminal such as a smart fueler in smart city (smart city), a terminal device on a high-speed railway, and a wireless terminal in smart home (smart home), such as a smart speaker, a smart coffee machine, and a smart printer.

In embodiments of this application, a communication apparatus configured to implement a terminal device function may be a terminal device, may be a terminal device having some terminal functions, or may be an apparatus that can support the terminal device in implementing the function, for example, a chip system. The communication apparatus may be mounted in the terminal device or used together with the terminal device. In embodiments of this application, the chip system may include a chip, or may include a chip and another discrete component. In the technical solutions provided in embodiments of this application, an example in which the communication apparatus configured to implement the terminal device function is the terminal device is used for description.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

It should be noted that in this application, in "sending information/data to A" and "sending information/data", "sending to A" and "sending" merely indicate an information/data transmission direction, A is a destination, and "sending information/data to A" is not limited to sending on an air interface. "Sending information/data to A" includes directly sending information/data to A and indirectly sending information/data to A. Therefore, "sending information/data to A" may also be understood as "outputting information/data to A" through a communication interface of a processing unit. Similarly, "sending information/data" may also be understood as "outputting information/data".

Similarly, "receiving information/data from A" and "receiving information/data" only indicate an information/data transmission direction, and "from A" indicates that the information/data is from A, including directly receiving information/data from A, and also including indirectly receiving information/data from A. Therefore, "receiving information/data from A" may also be understood as "inputting information/data from A" through the communication interface of the processing unit. Similarly, "receiving information/data" can also be understood as "inputting information/data".

The following describes technical features in embodiments of this application.

A DMRS is used for channel estimation, and therefore, is used for data detection and demodulation. The DMRS may be sent through a DMRS port. To ensure channel estimation quality, different DMRS ports are usually orthogonal ports, to avoid interference between the different DMRS ports. That the different DMRS ports are orthogonal ports means that DMRS symbols corresponding to the different DMRS ports are orthogonal in frequency domain, time-frequency domain, or code domain. Currently, 5G NR supports two DMRS resource mapping types. A type 1 (Type 1) DMRS may support a maximum of eight orthogonal DMRS ports. A type 2 (Type 2) DMRS may support a maximum of 12 orthogonal DMRS ports.

In multiple-input multiple-output (multiple-input multiple-output, MIMO) transmission, interference suppression is one of key factors to ensure performance of a received signal. After channel estimation, when performing data demodulation, a terminal device may attempt to estimate interference information and calculate a MIMO equalization coefficient based on the interference information. Currently, the terminal device performs interference estimation on a signal of a target port (namely, a DMRS port allocated by a network device to the terminal device), and a general procedure is as follows:
1. The terminal device performs channel estimation on the target port (namely, the DMRS port allocated by the network device to the terminal device), to obtain H1.
2. The terminal device determines an interference port.
3. The terminal device performs channel estimation on the interference port, to obtain H2.
4. The terminal device calculates an interference-plus-noise covariance matrix of a minimum mean square error (minimum mean square error, MMSE) algorithm based on H2, to obtain an MMSE equalization coefficient.
5. The terminal device performs data demodulation based on the MMSE equalization coefficient.

Currently, NR supports MIMO transmission of a maximum of 12 streams. Therefore, the terminal device achieves good demodulation performance with low complexity and low overheads. In addition, with continuous evolution of a massive MIMO system subsequently, a quantity of transceiver antennas further increases (for example, a quantity 128T or 256T of transmit antennas of a network device is supported, and a quantity of receive antennas of a terminal is 8R), and channel information is obtained more accurately, so that a larger quantity of transport streams can be further supported to improve spectral efficiency of the MIMO system. Therefore, more DMRS ports are needed to support the larger quantity of transport streams (more than 12 streams). Because different DMRS ports implement orthogonality through frequency division multiplexing, time division multiplexing, or code division multiplexing, and time-frequency resources and orthogonal codeword sets are limited, interference estimation performance is poor during high-order data transmission.

A possible method for increasing a quantity of DMRS ports is: multiplexing more non-orthogonal DMRS ports. Coexistence of low interference and high interference brings a severe challenge to interference estimation.

To overcome a problem that interference estimation performance is poor during high-order data transmission, embodiments of this application provide a communication method and apparatus. The method and the apparatus are based on a same inventive concept. Because the method and the apparatus have a similar problem-resolving principle, for implementations of the apparatus and the method, refer to each other, and no repeated description is provided.

The following specifically describes the communication method provided in this application with reference to the accompanying drawings.

FIG. 2 shows a communication method according to an embodiment of this application. The method may be applied to the communication system shown in FIG. 1. For ease of understanding, in this embodiment, descriptions are provided from perspectives of both sides of a terminal device and a network device. It should be understood that this constitutes no limitation on this application. This application has improvements on either side of the terminal device and the network device. Specifically, the method may be applied to the terminal device and the network device, or may be applied to a chip or a chip set/chip system of the terminal device and the network device. The following provides description by using an example in which the method is applied to the terminal device and the network device. The communication method may specifically include the following steps.

S201: The network device determines that a DMRS port allocated to a first terminal device is a first DMRS port.

S202: The network device sends first information and second information to the first terminal device. Correspondingly, the first terminal device receives the first information and the second information from the network device.

It may be understood that the first information and the second information may be separately sent/received, or may be simultaneously sent/received.

The first information indicates a first DMRS port, the second information indicates a plurality of sets corresponding to the first DMRS port, and the set includes at least one DMRS port. It should be noted that the first information and the second information may be carried in a same message, or may be carried in different messages. This is not specifically limited in this application.

For example, a DMRS port included in the plurality of sets may be determined based on interference to the first DMRS. Alternatively, a DMRS port included in the plurality of sets may be determined based on a quantity of scheduling layers, a time-frequency resource relationship, an orthogonal relationship/a non-orthogonal relationship, or the like. A classification basis of the plurality of sets is not limited in this application.

To facilitate understanding of the plurality of sets, the following describes three examples of the plurality of sets.

Example 1: The plurality of sets may be obtained through classification based on a time-frequency resource relationship and an orthogonal/non-orthogonal relationship between another DMRS port and the first DMRS port. For example, the plurality of sets may include at least two of a first set, a second set, and a third set.

The first set includes at least one DMRS port that meets the following condition: a corresponding time-frequency resource is the same as a time-frequency resource of the first DMRS port, and the at least one DMRS port is orthogonal to the first DMRS port (which may also be understood as that a corresponding sequence is the same as a sequence of the first DMRS port).

The second set includes at least one DMRS port that meets the following condition: a corresponding time-frequency resource is different from a time-frequency resource of the first DMRS port, and the at least one DMRS port is orthogonal to the first DMRS port (which may also be understood as that a corresponding sequence is the same as the sequence of the first DMRS port).

The third set includes at least one DMRS port that meets the following condition: a corresponding time-frequency resource is the same as a time-frequency resource of the first DMRS port, and the at least one DMRS port is non-orthogonal to the first DMRS port (which may also be understood as that a corresponding sequence is different from the sequence of the first DMRS port).

In Example 1, the first DMRS port may be included in any one of the three sets, or may be included in any two of the three sets, or certainly, the first DMRS port may be included in each of the three sets. In addition, the first DMRS port may not be indicated to the terminal device by using the three sets, but is indicated by using other signaling.

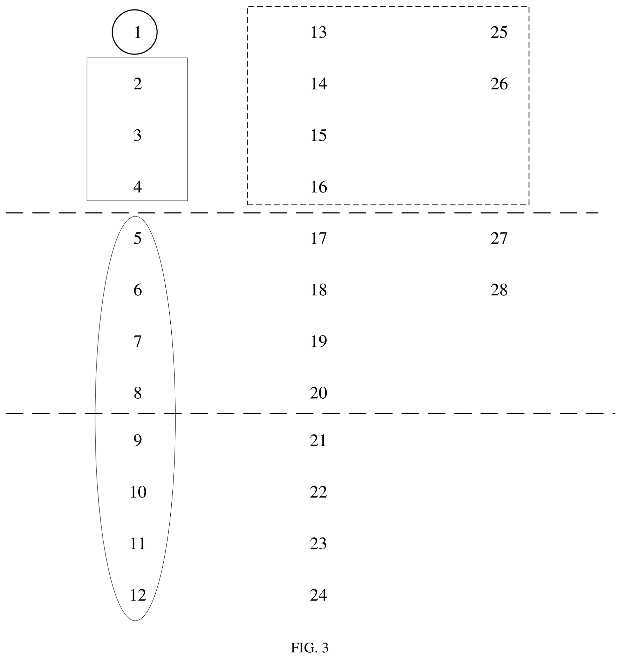

For example, as shown in FIG. 3, DMRS ports in every four rows occupy a same time-frequency resource. For example, DMRS ports in rows 1 to 4 occupy a same time-frequency resource. DMRS ports in rows 5 to 8 occupy a same time-frequency resource. DMRS ports in rows 9 to 12 occupy a same time-frequency resource. Sequences of DMRS ports in a same column are the same, which may be understood as that the DMRS ports are orthogonal to each other. For example, sequences of DMRS ports 1 to 12 are the same, sequences of DMRS ports 13 to 24 are the same, and sequences of DMRS ports 25 to 28 are the same.

It is assumed that the first DMRS port is a DMRS port 1, the first set may include DMRS ports 2 to 4, the second set may include DMRS ports 5 to 12, and the third set may include DMRS ports 13 to 16 and DMRS ports 25 and 26.

Example 2: Two sets may be obtained through classification based on interference of another DMRS port to the first DMRS port. To be specific, the plurality of sets include a fourth set and a fifth set.

Any DMRS port included in the fourth set meets the following condition: a ratio of an amount of interference to the first DMRS port to a total amount of interference of all DMRS ports included in the plurality of sets to the first DMRS port is greater than a first threshold.

Any DMRS port included in the fifth set meets the following condition: a ratio of an amount of interference to the first DMRS port to the total amount of interference of all the DMRS ports included in the plurality of sets to the first DMRS port is less than or equal to the first threshold.

Example 3: Two sets may be obtained through classification based on a quantity of scheduling layers of another DMRS port. To be specific, the plurality of sets include a sixth set and a seventh set.

Any DMRS port included in the sixth set meets the following condition: a ratio of a corresponding quantity of scheduling layers to a sum of quantities of scheduling layers of all DMRS ports included in the plurality of sets is greater than a second threshold.

A DMRS port included in the seventh set meets the following condition: a ratio of a corresponding quantity of scheduling layers to the sum of the quantities of scheduling layers of all the DMRS ports included in the plurality of sets is less than or equal to the second threshold.

The foregoing describes possible classification manners of the plurality of sets, and the following describes an indication manner of the second information.

In a possible manner, the second information may include a DMRS port number included in each of the plurality of sets.

In another possible manner, the second information may include indexes of the plurality of sets. For example, a protocol may define at least one set and define an index corresponding to the set, or the first terminal device and the network device pre-determine at least one set and a corresponding index, and the second information may indicate the plurality of sets by using the indexes.

In still another possible manner, the second information may include at least two of the following information about the plurality of sets: a largest DMRS port number, a smallest DMRS port number, and a quantity of DMRS ports. For example, FIG. 3 is used as an example. The second information may indicate a smallest DMRS port (namely, a DMRS port 1) and a quantity of DMRS ports (to be specific, the first set includes four DMRS ports) in the first set, so that the first terminal device may determine, based on the smallest DMRS port and the quantity of DMRS ports in the first set, that the first set includes DMRS ports 1 to 4.

Alternatively, a quantity of DMRS ports in any one of the plurality of sets may be predefined. For example, the network device and the terminal device pre-agree on the quantity of DMRS ports in any one of the plurality of sets. For another example, a protocol defines the quantity of DMRS ports in any one of the plurality of sets. The second information may include a largest DMRS port number or a smallest DMRS port number in a plurality of sets.

Optionally, in the foregoing manner, there may be a common constraint port number configuration principle between the first terminal device and the network device. For example, the port number configuration principle may be that DMRS port numbers are allocated in ascending order of indexes, and are always allocated consecutively. Alternatively, the port number configuration principle may be that a time-frequency resource occupied by a non-orthogonal DMRS port is always the same as a time-frequency resource occupied by several DMRS ports in a largest, smallest, or specified range. In other words, the non-orthogonal DMRS port is always multiplexed on several DMRS ports in the largest, smallest, or specified range.

The port number configuration principle may be defined in a protocol, or may be agreed on in advance by the first terminal device and the network device. A configuration manner of the port number configuration principle is not limited in this application.

In a possible manner, the second information may be defined in a protocol. For example, the protocol may define a plurality of sets corresponding to each DMRS port, so that the network device allocates a target DMRS port to the terminal device, and the terminal device may determine a plurality of sets corresponding to the target DMRS port based on the target DMRS port and the protocol.

In a possible implementation, the network device may further send third information to the first terminal device, and the third information may indicate sequence information of the plurality of sets. In this implementation, indication manners of the sequence information of the plurality of sets are different. For example, sequence information of some sets needs to be indicated, and sequence information of some other sets does not need to be indicated. That is, the third information indicates sequence information of some of the plurality of sets.

For example, Example 1 is used as an example. It is assumed that the plurality of sets include the first set, the second set, and the third set, and the third information indicates sequence information of the first set and sequence information of the second set. In this example, the third information may not indicate sequence information of the third set. For example, the third information directly carries the sequence information for indication. The third information carries the sequence information of the first set and the sequence information of the second set, but does not carry the sequence information of the third set.

It is assumed that the plurality of sets may include the first set and the second set, and the third information may indicate sequence information of the first set or sequence information of the second set. For example, the third information directly carries the sequence information for indication. The third information carries the sequence information of the first set or the sequence information of the second set.

It is assumed that the plurality of sets include the first set and the third set, and the third information may indicate sequence information of the first set. In this example, the third information may not indicate sequence information of the third set. For example, the third information directly carries the sequence information for indication. The third information carries the sequence information of the first set, but does not carry the sequence information of the third set.

It is assumed that the plurality of sets include the second set and the third set, and the third information indicates sequence information of the second set. In this example, the third information may not indicate sequence information of the third set. For example, the third information directly carries the sequence information for indication. The third information carries the sequence information of the second set, but does not carry the sequence information of the third set.

Because complete channel estimation needs to be performed on the first set and the second set, the third information indicates the sequence information of the first set and the sequence information of the second set, to improve accuracy of channel estimation of the first set and the second set. Because complete channel estimation does not need to be performed on the third set, the third information does not indicate the sequence information of the third set, to reduce signaling overheads.

Example 2 is used as an example. The third information may indicate sequence information of the fourth set. Because complete channel estimation needs to be performed on the fourth set, the third information indicates the sequence information of the fourth set, to improve accuracy of channel estimation of the fourth set. Because complete channel estimation does not need to be performed on the fifth set, the third information does not indicate sequence information of the fifth set, to reduce signaling overheads.

Example 3 is used as an example. The third information may indicate sequence information of the sixth set. Because complete channel estimation needs to be performed on the sixth set, the third information indicates the sequence information of the sixth set, to improve accuracy of channel estimation of the sixth set. Because complete channel estimation does not need to be performed on the seventh set, the third information does not indicate sequence information of the seventh set, to reduce signaling overheads.

S203: The first terminal determines interference of the plurality of sets to the first DMRS port.

The plurality of sets correspond to different interference measurement manners.

Example 1 is used as an example. The first terminal device performs complete channel estimation or interference suppression on the first set. For example, the first terminal device may perform channel estimation on the first set based on a minimum mean square error algorithm, or determine interference of the first set to the first DMRS port based on a minimum mean square error algorithm.

The first terminal device performs interference estimation on the second set based on a least square (least square, LS), that is, determines interference of the second set to the first DMRS port based on the LS algorithm.

The first terminal device performs energy estimation or interference suppression on the third set based on a diagonal of a correlation matrix. For example, the first terminal device may perform channel estimation on the third set based on a successive interference cancellation (successive interference cancellation, SIC) algorithm, or determine interference of the third set to the first DMRS port based on the SIC algorithm.

The foregoing describes a method for allocating, by the network device, a DMRS port to the first terminal device. In a specific implementation, the network device may further allocate a DMRS port to another terminal device. For example, a second terminal device is used as an example. The network device may allocate a second DMRS port to the second terminal device. A set to which the second DMRS port belongs is determined based on a distance between the second terminal device and the first terminal device. Optionally, after allocating the second DMRS port to the second terminal, the network device may send fourth information to the second terminal. The fourth information indicates the second DMRS port allocated to the second terminal.

For example, if the distance between the first terminal device and the second terminal device is large (for example, the distance between the first terminal device and the second terminal device is greater than a threshold 1), the network device may allocate a DMRS port to the second terminal device from the third set/fifth set of the first DMRS port.

If the distance between the first terminal device and the second terminal device is small (for example, the distance between the first terminal device and the second terminal device is less than the threshold 1), the network device may allocate a DMRS port to the second terminal device from the first set/second set/fifth set of the first DMRS port.

It should be noted that, when the distance between the first terminal device and the second terminal device is equal to the threshold 1, the network device may allocate a DMRS port to the second terminal device from the third set/fifth set of the first DMRS port, or may allocate a DMRS port to the second terminal device from the first set/second set/fifth set of the first DMRS port. This is not specifically limited in this application.

Specifically, if the distance between the first terminal device and the second terminal device is less than the threshold 1, the network device allocates a DMRS port to the second terminal device from the first set or the second set. In a possible manner, the network device may allocate a DMRS port to the second terminal device from a DMRS port included in the first set and a DMRS port included in the second set. To be specific, the DMRS ports included in the first set and the DMRS ports included in the second set are combined into a set, and a DMRS port is allocated to the second terminal device from the set.

In a possible manner, the distance between the first terminal device and the second terminal device may be further compared with a threshold 2, and a DMRS port is allocated to the second terminal device based on a comparison result. The threshold 2 is less than the threshold 1. If the distance between the first terminal device and the second terminal device is less than the threshold 1 and greater than the threshold 2, a DMRS port may be allocated to the second terminal device from the DMRS port included in the first set. If the distance between the first terminal device and the second terminal device is less than the threshold 1 and less than the threshold 2, a DMRS port may be allocated to the second terminal device from the DMRS port included in the second set.

It should be noted that, when the distance between the first terminal device and the second terminal device is equal to the threshold 2, the network device may allocate a DMRS port to the second terminal device from the first set of the first DMRS port, or may allocate a DMRS port to the second terminal device from the second set of the first DMRS port. This is not specifically limited in this application.

After allocating a DMRS port to the second terminal device, the network device may indicate the DMRS port allocated to the second terminal device and a plurality of sets corresponding to the DMRS port in the method in FIG. 2. Correspondingly, the second terminal device may perform interference estimation on the plurality of sets corresponding to the DMRS port. For details, refer to related descriptions in FIG. 2. Details are not described herein again.

In a possible implementation, in addition to the distance between the first terminal and the second terminal, the network device may further allocate the DMRS port to the second terminal with reference to other information, for example, information such as a UE antenna configuration, an interference processing capability, and a quality of service (quality of service, QoS) requirement.

In a possible solution, the first terminal may send a UE capability of the first terminal to the network device. The UE capability of the first terminal may carry information such as location information of the first terminal, a UE antenna configuration of the first terminal, an interference processing capability of the first terminal, and a QoS requirement of the first terminal.

Alternatively, the second terminal may send a UE capability of the second terminal to the network device. The UE capability of the second terminal may carry information such as location information of the second terminal, a UE antenna configuration of the second terminal, an interference processing capability of the second terminal, and a QoS requirement of the second terminal.

In this embodiment of this application, different DMRS port groups and different port group indications can improve accuracy and fineness of interference processing of a terminal device, help implement mapping of a higher-order DMRS, improve a port multiplexing capability, and implement transmission of more orthogonal data streams.

In addition, in this embodiment of this application, different DMRS port sets match different sequence indication manners, to further reduce indication overheads and improve data transmission efficiency.

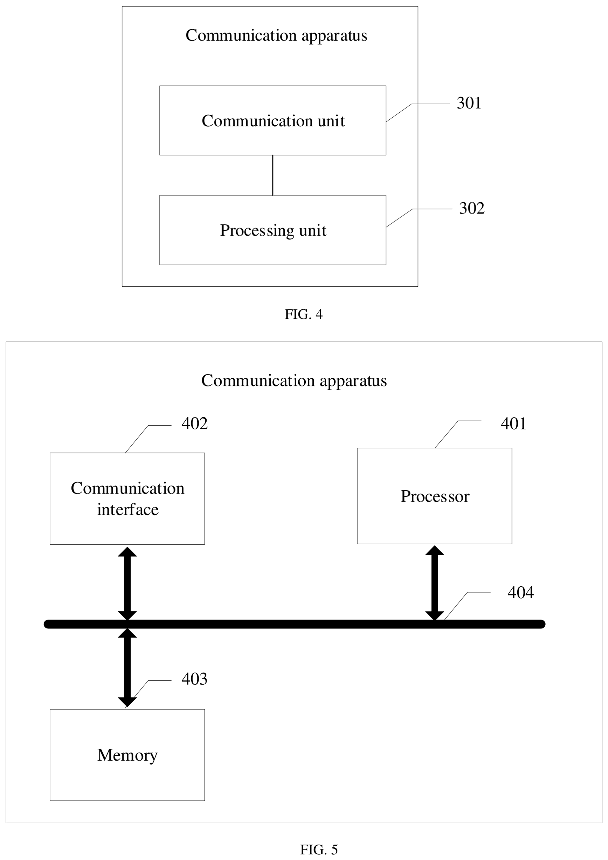

Based on a same inventive concept as the method embodiments, an embodiment of this application provides a communication apparatus. A structure of the communication apparatus may be shown in FIG. 4. The communication apparatus includes a communication unit 301 and a processing unit 302.

In an implementation, the communication apparatus may be specifically configured to implement the method performed by the terminal device in the embodiment in FIG. 2. The apparatus may be the terminal device, may be a chip or a chip set in the terminal device, or a part of the chip that is configured to perform a related method function. The communication unit 301 is configured to communicate with the terminal device. The processing unit 302 is configured to receive first information and second information from a network device by using the communication unit 301. The first information indicates a first DMRS port, the second information indicates a plurality of sets corresponding to the first DMRS port, and any one of the plurality of sets includes at least one DMRS port.

For example, a DMRS port included in the plurality of sets is determined based on interference to the first DMRS port.

For example, the plurality of sets include at least two of a first set, a second set, and a third set; the first set includes at least one DMRS port that meets the following condition: a corresponding time-frequency resource is the same as a time-frequency resource of the first DMRS port, and the at least one DMRS port is orthogonal to the first DMRS port; the second set includes at least one DMRS port that meets the following condition: a corresponding time-frequency resource is different from a time-frequency resource of the first DMRS port, and the at least one DMRS port is orthogonal to the first DMRS port; and the third set includes at least one DMRS port that meets the following condition: a corresponding time-frequency resource is the same as a time-frequency resource of the first DMRS port, and a corresponding sequence is different from a sequence of the first DMRS.

For example, the plurality of sets include a fourth set and a fifth set; any DMRS port included in the fourth set meets the following condition: a ratio of an amount of interference to the first DMRS port to a total amount of interference of all DMRS ports included in the plurality of sets to the first DMRS port is greater than a first threshold; and any DMRS port included in the fifth set meets the following condition: a ratio of an amount of interference to the first DMRS port to the total amount of interference of all the DMRS ports included in the plurality of sets to the first DMRS port is less than or equal to the first threshold.

For example, the plurality of sets include a sixth set and a seventh set; any DMRS port included in the sixth set meets the following condition: a ratio of a corresponding quantity of scheduling layers to a sum of quantities of scheduling layers of all DMRS ports included in the plurality of sets is greater than a second threshold; and a DMRS port included in the seventh set meets the following condition: a ratio of a corresponding quantity of scheduling layers to the sum of the quantities of scheduling layers of all the DMRS ports included in the plurality of sets is less than or equal to the second threshold.

Optionally, the communication unit 301 is further configured to receive third information from the network device. The third information indicates sequence information of some of the plurality of sets.

For example, the plurality of sets include the first set, the second set, and the third set, and the third information indicates sequence information of the first set and/or sequence information of the second set.

For example, the plurality of sets include the first set and the second set, and the third information indicates sequence information of the first set or sequence information of the second set.

For example, the plurality of sets include the first set and the third set, and the third information indicates sequence information of the first set.

For example, the plurality of sets include the second set and the third set, and the third information indicates sequence information of the second set.

For example, the third information indicates sequence information of the fourth set.

For example, the third information indicates sequence information of the sixth set.

For example, the second information includes a DMRS port number included in each of the plurality of sets; or the second information includes indexes of the plurality of sets; or the second information includes at least two of the following information about the plurality of sets: a largest DMRS port number, a smallest DMRS port number, and a quantity of DMRS ports.

Optionally, the processing unit 302 is further configured to determine interference of the plurality of sets to the first DMRS port. The plurality of sets correspond to different interference measurement manners.

Optionally, the processing unit 302 is specifically configured to: determine interference of the first set to the first DMRS port based on a minimum mean square error algorithm; determining interference of the second set to the first DMRS port based on an LS algorithm; and determine interference of the third set to the first DMRS port based on an SIC algorithm.

In an implementation, the communication apparatus may be specifically configured to implement the method performed by the network device in the embodiment in FIG. 2. The apparatus may be the network device, may be a chip or a chip set in the network device, or a part of the chip that is configured to perform a related method function. The processing unit 302 is configured to determine that a DMRS port allocated to a first terminal is a first DMRS port; and the communication unit 301 is configured to send first information and second information to the first terminal. The first information indicates the first DMRS port, the second information indicates a plurality of sets corresponding to the first DMRS port, and any one of the plurality of sets includes at least one DMRS port.

For example, a DMRS port included in the plurality of sets is determined based on interference to the first DMRS port.

For example, the plurality of sets include at least two of a first set, a second set, and a third set; the first set includes at least one DMRS port that meets the following condition: a corresponding time-frequency resource is the same as a time-frequency resource of the first DMRS port, and the at least one DMRS port is orthogonal to the first DMRS port; the second set includes at least one DMRS port that meets the following condition: a corresponding time-frequency resource is different from a time-frequency resource of the first DMRS port, and the at least one DMRS port is orthogonal to the first DMRS port; and the third set includes at least one DMRS port that meets the following condition: a corresponding time-frequency resource is the same as a time-frequency resource of the first DMRS port, and the at least one DMRS port is non-orthogonal to the first DMRS port.

For example, the plurality of sets include a fourth set and a fifth set; any DMRS port included in the fourth set meets the following condition: a ratio of an amount of interference to the first DMRS port to a total amount of interference of all DMRS ports included in the plurality of sets to the first DMRS port is greater than a first threshold; and any DMRS port included in the fifth set meets the following condition: a ratio of an amount of interference to the first DMRS port to the total amount of interference of all the DMRS ports included in the plurality of sets to the first DMRS port is less than or equal to the first threshold.

For example, the plurality of sets include a sixth set and a seventh set; any DMRS port included in the sixth set meets the following condition: a ratio of a corresponding quantity of scheduling layers to a sum of quantities of scheduling layers of all DMRS ports included in the plurality of sets is greater than a second threshold; and a DMRS port included in the seventh set meets the following condition: a ratio of a corresponding quantity of scheduling layers to the sum of the quantities of scheduling layers of all the DMRS ports included in the plurality of sets is less than or equal to the second threshold.

Optionally, the communication unit 301 is further configured to send third information to the first terminal. The third information indicates sequence information of some of the plurality of sets.

For example, the plurality of sets include the first set, the second set, and the third set, and the third information indicates sequence information of the first set and/or sequence information of the second set; or the plurality of sets include the first set and the second set, and the third information indicates sequence information of the first set or sequence information of the second set; or the plurality of sets include the first set and the third set, and the third information indicates sequence information of the first set; or the plurality of sets include the second set and the third set, and the third information indicates sequence information of the second set.

For example, the third information indicates sequence information of the fourth set.

For example, the third information indicates sequence information of the sixth set.

Optionally, the communication unit 301 is further configured to send fourth information to a second terminal. The fourth information indicates a second DMRS port allocated to the second terminal. A set to which the second DMRS port belongs is determined based on information about a distance between the second terminal and the first terminal.

For example, the second information includes a DMRS port number included in each of the plurality of sets; or the second information includes indexes of the plurality of sets; or the second information includes at least two of the following information about the plurality of sets: a largest DMRS port number, a smallest DMRS port number, and a quantity of DMRS ports.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related description in the method embodiments.

In a possible manner, a communication apparatus may be shown in FIG. 5. The apparatus may be a communication device or a chip in the communication device. The communication device may be the terminal device in the foregoing embodiments or the network device in the foregoing embodiments. The apparatus includes a processor 401 and a communication interface 402, and may further include a memory 403. The processing unit 302 may be the processor 401. The communication unit 301 may be a communication interface 402. Optionally, the processor 401 and the memory 403 may alternatively be integrated together.

The processor 401 may be a CPU, a digital processing unit, or the like. The communication interface 402 may be a transceiver, an interface circuit such as a transceiver circuit, a transceiver chip, or the like. The apparatus further includes the memory 403, configured to store a program to be executed by the processor 401. The memory 403 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory 403 is any other medium that can be used to carry or store expected program code in a form of instructions or a data structure and that can be accessed by a computer, but is not limited thereto.

The processor 401 is configured to execute the program code stored in the memory 403, and is specifically configured to perform an action of the processing unit 302. Details are not described herein again in this application. The communication interface 402 is specifically configured to perform an action of the communication unit 301. Details are not described herein again in this application.

In this embodiment of this application, a specific connection medium between the communication interface 402, the processor 401, and the memory 403 is not limited. In this embodiment of this application, in FIG. 5, the memory 403, the processor 401, and the communication interface 402 are connected through a bus 404. The bus is represented by a bold line in FIG. 5. A connection manner between other components is merely an example for description, and is not limited thereto. Buses may be classified into an address bus, a data bus, a control bus, and the like. For ease of representation, only one bold line is used for indication in FIG. 5, but it does not indicate that there is only one bus or only one type of bus.

An embodiment of the present invention further provides a computer-readable storage medium, configured to store computer software instructions that need to be executed by the foregoing processor. The computer-readable storage medium includes a program that needs to be executed by the foregoing processor.

An embodiment of this application further provides a communication system, including a communication apparatus configured to implement the terminal device function in the embodiment in FIG. 2 and a communication apparatus configured to implement the network device function in the embodiment in FIG. 2.

A person skilled in the art should understand that embodiments of this application may be provided as a method, a system, or a computer program product. Therefore, this application may be in a form of hardware only embodiments, software only embodiments, or embodiments with a combination of software and hardware. In addition, this application may be in a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. Therefore, this application is intended to cover these modifications and variations of this application provided that they fall within the scope defined by the following claims and their equivalent technologies.

## Claims

1. A communication method, wherein the method comprises:
determining that a demodulation reference signal DMRS port allocated to a first terminal is a first DMRS port; and
sending first information and second information to the first terminal, wherein the first information indicates the first DMRS port, the second information indicates a plurality of sets corresponding to the first DMRS port, and any one of the plurality of sets comprises at least one DMRS port.

2. The method according to claim 1, wherein a DMRS port comprised in the plurality of sets is determined based on interference to the first DMRS port.

3. The method according to claim 1 or 2, wherein the plurality of sets comprise at least two of a first set, a second set, and a third set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and the at least one DMRS port is non-orthogonal to the first DMRS port.

4. The method according to claim 1 or 2, wherein the plurality of sets comprise a fourth set and a fifth set;
any DMRS port comprised in the fourth set meets the following condition: a ratio of an amount of interference to the first DMRS port to a total amount of interference of all DMRS ports comprised in the plurality of sets to the first DMRS port is greater than a first threshold; and
any DMRS port comprised in the fifth set meets the following condition: a ratio of an amount of interference to the first DMRS port to the total amount of interference of all the DMRS ports comprised in the plurality of sets to the first DMRS port is less than or equal to the first threshold.

5. The method according to claim 1 or 2, wherein the plurality of sets comprise a sixth set and a seventh set;
any DMRS port comprised in the sixth set meets the following condition: a ratio of a corresponding quantity of scheduling layers to a sum of quantities of scheduling layers of all DMRS ports comprised in the plurality of sets is greater than a second threshold; and
a DMRS port comprised in the seventh set meets the following condition: a ratio of a corresponding quantity of scheduling layers to the sum of the quantities of scheduling layers of all the DMRS ports comprised in the plurality of sets is less than or equal to the second threshold.

6. The method according to any one of claims 1 to 5, wherein the method further comprises:
sending third information to the first terminal, wherein the third information indicates sequence information of some of the plurality of sets.

7. The method according to claim 6, wherein the plurality of sets comprise the first set, the second set, and the third set, and the third information indicates sequence information of the first set and/or sequence information of the second set; or
the plurality of sets comprise the first set and the second set, and the third information indicates sequence information of the first set or sequence information of the second set; or
the plurality of sets comprise the first set and the third set, and the third information indicates sequence information of the first set; or
the plurality of sets comprise the second set and the third set, and the third information indicates sequence information of the second set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and the at least one DMRS port is non-orthogonal to the first DMRS port.

8. The method according to claim 6, wherein the third information indicates sequence information of the fourth set;
the any DMRS port comprised in the fourth set meets the following condition: the ratio of the amount of interference to the first DMRS port to the total amount of interference of all the DMRS ports comprised in the plurality of sets to the first DMRS port is greater than the first threshold; and
the any DMRS port comprised in the fifth set meets the following condition: the ratio of the amount of interference to the first DMRS port to the total amount of interference of all the DMRS ports comprised in the plurality of sets to the first DMRS port is less than or equal to the first threshold.

9. The method according to claim 6, wherein the third information indicates sequence information of the sixth set;
the any DMRS port comprised in the sixth set meets the following condition: the ratio of the corresponding quantity of scheduling layers to the sum of quantities of scheduling layers of all the DMRS ports comprised in the plurality of sets is greater than the second threshold; and
the DMRS port comprised in the seventh set meets the following condition: the ratio of the corresponding quantity of scheduling layers to the sum of the quantities of scheduling layers of all the DMRS ports comprised in the plurality of sets is less than or equal to the second threshold.

10. The method according to any one of claims 1 to 9, wherein the method further comprises:
sending fourth information to a second terminal, wherein the fourth information indicates a second DMRS port allocated to the second terminal, wherein
a set to which the second DMRS port belongs is determined based on information about a distance between the second terminal and the first terminal.

11. The method according to any one of claims 1 to 10, wherein the second information comprises a DMRS port number comprised in each of the plurality of sets; or
the second information comprises indexes of the plurality of sets; or
the second information comprises at least two of the following information about the plurality of sets: a largest DMRS port number, a smallest DMRS port number, and a quantity of DMRS ports.

12. A communication method, wherein the method comprises:
receiving first information and second information from a network device, wherein
the first information indicates a first demodulation reference signal DMRS port, the second information indicates a plurality of sets corresponding to the first DMRS port, and any one of the plurality of sets comprises at least one DMRS port.

13. The method according to claim 12, wherein a DMRS port comprised in the plurality of sets is determined based on interference to the first DMRS port.

14. The method according to claim 12 or 13, wherein the plurality of sets comprise at least two of a first set, a second set, and a third set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and a corresponding sequence is different from a sequence of the first DMRS.

15. The method according to claim 12 or 13, wherein the plurality of sets comprise a fourth set and a fifth set;
any DMRS port comprised in the fourth set meets the following condition: a ratio of an amount of interference to the first DMRS port to a total amount of interference of all DMRS ports comprised in the plurality of sets to the first DMRS port is greater than a first threshold; and
any DMRS port comprised in the fifth set meets the following condition: a ratio of an amount of interference to the first DMRS port to a total amount of interference of all the DMRS ports comprised in the plurality of sets to the first DMRS port is less than or equal to the first threshold.

16. The method according to claim 12 or 13, wherein the plurality of sets comprise a sixth set and a seventh set;
any DMRS port comprised in the sixth set meets the following condition: a ratio of a corresponding quantity of scheduling layers to a sum of quantities of scheduling layers of all DMRS ports comprised in the plurality of sets is greater than a second threshold; and
a DMRS port comprised in the seventh set meets the following condition: a ratio of a corresponding quantity of scheduling layers to the sum of the quantities of scheduling layers of all the DMRS ports comprised in the plurality of sets is less than or equal to the second threshold.

17. The method according to any one of claims 12 to 16, wherein the method further comprises:
receiving third information from the network device, wherein the third information indicates sequence information of some of the plurality of sets.

18. The method according to claim 17, wherein
the plurality of sets comprise the first set, the second set, and the third set, and the third information indicates sequence information of the first set and/or sequence information of the second set; or
the plurality of sets comprise the first set and the second set, and the third information indicates sequence information of the first set or sequence information of the second set; or
the plurality of sets comprise the first set and the third set, and the third information indicates sequence information of the first set; or
the plurality of sets comprise the second set and the third set, and the third information indicates sequence information of the second set;
the first set comprises the at least one DMRS port that meets the following condition: the corresponding time-frequency resource is the same as the time-frequency resource of the first DMRS port, and the at least one DMRS port is orthogonal to the first DMRS port;
the second set comprises the at least one DMRS port that meets the following condition: the corresponding time-frequency resource is different from the time-frequency resource of the first DMRS port, and the at least one DMRS port is orthogonal to the first DMRS port; and
the third set comprises the at least one DMRS port that meets the following condition: the corresponding time-frequency resource is the same as the time-frequency resource of the first DMRS port, and the at least one DMRS port is non-orthogonal to the first DMRS port.

19. The method according to claim 17, wherein the third information indicates sequence information of the fourth set;
the any DMRS port comprised in the fourth set meets the following condition: the ratio of the amount of interference to the first DMRS port to the total amount of interference of all the DMRS ports comprised in the plurality of sets to the first DMRS port is greater than the first threshold; and
the any DMRS port comprised in the fifth set meets the following condition: the ratio of the amount of interference to the first DMRS port to the total amount of interference of all the DMRS ports comprised in the plurality of sets to the first DMRS port is less than or equal to the first threshold.

20. The method according to claim 17, wherein the third information indicates sequence information of the sixth set;
the any DMRS port comprised in the sixth set meets the following condition: the ratio of the corresponding quantity of scheduling layers to the sum of quantities of scheduling layers of all the DMRS ports comprised in the plurality of sets is greater than the second threshold; and
the DMRS port comprised in the seventh set meets the following condition: the ratio of the corresponding quantity of scheduling layers to the sum of the quantities of scheduling layers of all the DMRS ports comprised in the plurality of sets is less than or equal to the second threshold.

21. The method according to any one of claims 12 to 20, wherein the second information comprises a DMRS port number comprised in each of the plurality of sets; or
the second information comprises indexes of the plurality of sets; or
the second information comprises at least two of the following information about the plurality of sets: a largest DMRS port number, a smallest DMRS port number, and a quantity of DMRS ports.

22. The method according to any one of claims 12 to 21, wherein the method further comprises:
determining interference of the plurality of sets to the first DMRS port, wherein the plurality of sets correspond to different interference measurement manners.

23. The method according to claim 22, wherein determining the interference of the plurality of sets to the first DMRS port comprises:
determining interference of the first set to the first DMRS port based on a minimum mean square error algorithm;
determining interference of the second set to the first DMRS port based on a least square LS algorithm; and
determining interference of the third set to the first DMRS port based on a successive interference cancellation SIC algorithm, wherein
the first set comprises the at least one DMRS port that meets the following condition: the corresponding time-frequency resource is the same as the time-frequency resource of the first DMRS port, and the at least one DMRS port is orthogonal to the first DMRS port;
the second set comprises the at least one DMRS port that meets the following condition: the corresponding time-frequency resource is different from the time-frequency resource of the first DMRS port, and the at least one DMRS port is orthogonal to the first DMRS port; and
the third set comprises the at least one DMRS port that meets the following condition: the corresponding time-frequency resource is the same as the time-frequency resource of the first DMRS port, and the at least one DMRS port is non-orthogonal to the first DMRS port.

24. A communication apparatus, wherein the apparatus comprises:
a processing unit, configured to determine that a demodulation reference signal DMRS port allocated to a first terminal is a first DMRS port; and
a communication unit, configured to send first information and second information to the first terminal, wherein the first information indicates the first DMRS port, the second information indicates a plurality of sets corresponding to the first DMRS port, and any one of the plurality of sets comprises at least one DMRS port.

25. The apparatus according to claim 24, wherein a DMRS port comprised in the plurality of sets is determined based on interference to the first DMRS port.

26. The apparatus according to claim 24 or 25, wherein the plurality of sets comprise at least two of a first set, a second set, and a third set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and the at least one DMRS port is non-orthogonal to the first DMRS port.

27. The apparatus according to claim 24 or 25, wherein the plurality of sets comprise a fourth set and a fifth set;
any DMRS port comprised in the fourth set meets the following condition: a ratio of an amount of interference to the first DMRS port to a total amount of interference of all DMRS ports comprised in the plurality of sets to the first DMRS port is greater than a first threshold; and
any DMRS port comprised in the fifth set meets the following condition: a ratio of an amount of interference to the first DMRS port to the total amount of interference of all the DMRS ports comprised in the plurality of sets to the first DMRS port is less than or equal to the first threshold.

28. The apparatus according to claim 24 or 25, wherein the plurality of sets comprise a sixth set and a seventh set;
any DMRS port comprised in the sixth set meets the following condition: a ratio of a corresponding quantity of scheduling layers to a sum of quantities of scheduling layers of all DMRS ports comprised in the plurality of sets is greater than a second threshold; and
a DMRS port comprised in the seventh set meets the following condition: a ratio of a corresponding quantity of scheduling layers to the sum of the quantities of scheduling layers of all the DMRS ports comprised in the plurality of sets is less than or equal to the second threshold.

29. The apparatus according to any one of claims 24 to 28, wherein the communication unit is further configured to:
send third information to the first terminal, wherein the third information indicates sequence information of some of the plurality of sets.

30. The apparatus according to claim 29, wherein the plurality of sets comprise the first set, the second set, and the third set, and the third information indicates sequence information of the first set and/or sequence information of the second set; or
the plurality of sets comprise the first set and the second set, and the third information indicates sequence information of the first set or sequence information of the second set; or
the plurality of sets comprise the first set and the third set, and the third information indicates sequence information of the first set; or
the plurality of sets comprise the second set and the third set, and the third information indicates sequence information of the second set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and the at least one DMRS port is non-orthogonal to the first DMRS port.

31. The apparatus according to claim 29, wherein the third information indicates sequence information of the fourth set;
the any DMRS port comprised in the fourth set meets the following condition: the ratio of the amount of interference to the first DMRS port to the total amount of interference of all the DMRS ports comprised in the plurality of sets to the first DMRS port is greater than the first threshold; and
the any DMRS port comprised in the fifth set meets the following condition: the ratio of the amount of interference to the first DMRS port to the total amount of interference of all the DMRS ports comprised in the plurality of sets to the first DMRS port is less than or equal to the first threshold.

32. The apparatus according to claim 29, wherein the third information indicates sequence information of the sixth set;
the any DMRS port comprised in the sixth set meets the following condition: the ratio of the corresponding quantity of scheduling layers to the sum of quantities of scheduling layers of all the DMRS ports comprised in the plurality of sets is greater than the second threshold; and
the DMRS port comprised in the seventh set meets the following condition: the ratio of the corresponding quantity of scheduling layers to the sum of the quantities of scheduling layers of all the DMRS ports comprised in the plurality of sets is less than or equal to the second threshold.

33. The apparatus according to any one of claims 24 to 32, wherein the communication unit is further configured to:
send fourth information to a second terminal, wherein the fourth information indicates a second DMRS port allocated to the second terminal, wherein
a set to which the second DMRS port belongs is determined based on information about a distance between the second terminal and the first terminal.

34. The apparatus according to any one of claims 24 to 33, wherein the second information comprises a DMRS port number comprised in each of the plurality of sets; or
the second information comprises indexes of the plurality of sets; or
the second information comprises at least two of the following information about the plurality of sets: a largest DMRS port number, a smallest DMRS port number, and a quantity of DMRS ports.

35. A communication apparatus, wherein the apparatus comprises:
a communication unit, configured to communicate with a network device; and
a processing unit, configured to receive first information and second information from the network device by using the communication unit, wherein
the first information indicates a first demodulation reference signal DMRS port, the second information indicates a plurality of sets corresponding to the first DMRS port, and any one of the plurality of sets comprises at least one DMRS port.

36. The apparatus according to claim 35, wherein a DMRS port comprised in the plurality of sets is determined based on interference to the first DMRS port.

37. The apparatus according to claim 35 or 36, wherein the plurality of sets comprise at least two of a first set, a second set, and a third set;
the first set comprises at least one DMRS port that meets the following condition: a corresponding time-frequency resource is the same as a time-frequency resource of the first DMRS port, and the at least one DMRS port is orthogonal to the first DMRS port;
the second set comprises at least one DMRS port that meets the following condition: a corresponding time-frequency resource is different from a time-frequency resource of the first DMRS port, and the at least one DMRS port is orthogonal to the first DMRS port; and
the third set comprises at least one DMRS port that meets the following condition: a corresponding time-frequency resource is the same as a time-frequency resource of the first DMRS port, and a corresponding sequence is different from a sequence of the first DMRS.

38. The apparatus according to claim 35 or 36, wherein the plurality of sets comprise a fourth set and a fifth set;
any DMRS port comprised in the fourth set meets the following condition: a ratio of an amount of interference to the first DMRS port to a total amount of interference of all DMRS ports comprised in the plurality of sets to the first DMRS port is greater than a first threshold; and
any DMRS port comprised in the fifth set meets the following condition: a ratio of an amount of interference to the first DMRS port to the total amount of interference of all the DMRS ports comprised in the plurality of sets to the first DMRS port is less than or equal to the first threshold.

39. The apparatus according to claim 35 or 36, wherein the plurality of sets comprise a sixth set and a seventh set;
any DMRS port comprised in the sixth set meets the following condition: a ratio of a corresponding quantity of scheduling layers to a sum of quantities of scheduling layers of all DMRS ports comprised in the plurality of sets is greater than a second threshold; and
a DMRS port comprised in the seventh set meets the following condition: a ratio of a corresponding quantity of scheduling layers to the sum of the quantities of scheduling layers of all the DMRS ports comprised in the plurality of sets is less than or equal to the second threshold.

40. The apparatus according to any one of claims 35 to 39, wherein the communication unit is further configured to:
receive third information from the network device, wherein the third information indicates sequence information of some of the plurality of sets.

41. The apparatus according to claim 40, wherein
the plurality of sets comprise the first set, the second set, and the third set, and the third information indicates sequence information of the first set and/or sequence information of the second set; or
the plurality of sets comprise the first set and the second set, and the third information indicates sequence information of the first set or sequence information of the second set; or
the plurality of sets comprise the first set and the third set, and the third information indicates sequence information of the first set; or
the plurality of sets comprise the second set and the third set, and the third information indicates sequence information of the second set;
the first set comprises the at least one DMRS port that meets the following condition: the corresponding time-frequency resource is the same as the time-frequency resource of the first DMRS port, and the at least one DMRS port is orthogonal to the first DMRS port;
the second set comprises the at least one DMRS port that meets the following condition: the corresponding time-frequency resource is different from the time-frequency resource of the first DMRS port, and the at least one DMRS port is orthogonal to the first DMRS port; and
the third set comprises the at least one DMRS port that meets the following condition: the corresponding time-frequency resource is the same as the time-frequency resource of the first DMRS port, and the at least one DMRS port is non-orthogonal to the first DMRS port.

42. The apparatus according to claim 40, wherein the third information indicates sequence information of the fourth set;
the any DMRS port comprised in the fourth set meets the following condition: the ratio of the amount of interference to the first DMRS port to the total amount of interference of all the DMRS ports comprised in the plurality of sets to the first DMRS port is greater than the first threshold; and
the any DMRS port comprised in the fifth set meets the following condition: the ratio of the amount of interference to the first DMRS port to the total amount of interference of all the DMRS ports comprised in the plurality of sets to the first DMRS port is less than or equal to the first threshold.

43. The apparatus according to claim 40, wherein the third information indicates sequence information of the sixth set;
the any DMRS port comprised in the sixth set meets the following condition: the ratio of the corresponding quantity of scheduling layers to the sum of quantities of scheduling layers of all the DMRS ports comprised in the plurality of sets is greater than the second threshold; and
the DMRS port comprised in the seventh set meets the following condition: the ratio of the corresponding quantity of scheduling layers to the sum of the quantities of scheduling layers of all the DMRS ports comprised in the plurality of sets is less than or equal to the second threshold.

44. The apparatus according to any one of claims 35 to 43, wherein the second information comprises a DMRS port number comprised in each of the plurality of sets; or
the second information comprises indexes of the plurality of sets; or
the second information comprises at least two of the following information about the plurality of sets: a largest DMRS port number, a smallest DMRS port number, and a quantity of DMRS ports.

45. The apparatus according to any one of claims 35 to 44, wherein the processing unit is further configured to:
determine interference of the plurality of sets to the first DMRS port, wherein the plurality of sets correspond to different interference measurement manners.

46. The apparatus according to claim 45, wherein the processing unit is specifically configured to:
determine interference of the first set to the first DMRS port based on a minimum mean square error algorithm;
determine interference of the second set to the first DMRS port based on a least square LS algorithm; and
determine interference of the third set to the first DMRS port based on a successive interference cancellation SIC algorithm, wherein
the first set comprises the at least one DMRS port that meets the following condition: the corresponding time-frequency resource is the same as the time-frequency resource of the first DMRS port, and the at least one DMRS port is orthogonal to the first DMRS port;
the second set comprises the at least one DMRS port that meets the following condition: the corresponding time-frequency resource is different from the time-frequency resource of the first DMRS port, and the at least one DMRS port is orthogonal to the first DMRS port; and
the third set comprises the at least one DMRS port that meets the following condition: the corresponding time-frequency resource is the same as the time-frequency resource of the first DMRS port, and the at least one DMRS port is non-orthogonal to the first DMRS port.

47. A communication apparatus, comprising a processor and a memory, wherein the memory is configured to store program instructions, and when the processor executes the program instructions, the method according to any one of claims 1 to 11 is performed, or the method according to any one of claims 12 to 23 is performed.

48. A computer-readable storage medium, wherein the computer storage medium stores computer-readable instructions; and when the computer-readable instructions are run on a communication apparatus, the method according to any one of claims 1 to 11 is performed, or the method according to any one of claims 12 to 23 is performed.

49. A computer program product, wherein when the computer program product runs on a device, the device is enabled to perform the method according to any one of claims 1 to 11 or the method according to any one of claims 12 to 23.
